(19) Europäisches Patentamt

European Patent Office

Office européen des brevets

(11) EP 0 862 141 A2

(12) EUROPÄISCHE PATENTANMELDUNG

(43) Veröffentlichungstag:
02.09.1998 Patentblatt 1998/36

(51) Int Cl.⁶: G06T 15/10

(21) Anmeldenummer: 98250057.1

(22) Anmeldetag: 17.02.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 21.02.1997 DE 19708679

(71) Anmelder: GMD - FORSCHUNGSZENTRUM INFORMATIONSTECHNIK GMBH
D-53757 Sankt Augustin (DE)

(72) Erfinder:
• Wittig, Oliver
10555 Berlin (DE)
• Budianto, Suwanto
10557 Berlin (DE)

(74) Vertreter: Christiansen, Henning, Dipl.-Ing.
Patentanwalt
Pacelliallee 43/45
14195 Berlin (DE)

(54) **Bilddarstellungsverfahren und Vorrichtung zur Durchführung des Verfahrens**

(57) Bildverarbeitungsverfahren und -vorrichtung zur Darstellung computermodellierter Objekte, die in Form eines Gittermodells vorliegen und durch mehrere aneinandergrenzende Polygonflächen nachgebildet werden, wobei die einzelnen Polygonflächen in Rasterelemente aufgeteilt werden und der Bildeindruck jedes Rasterelements zum einen entsprechend dem Phong schen Beleuchtungsmodell und zum anderen durch geeignete Adressierung von den Bildeindruck der Umgebung wiedergebenden Speichermatrizen (8, 9) berechnet wird, so daß sowohl eine natürlich wirkende Schattierung als auch die Berücksichtigung von Reflexionen der Umgebung in den Objekten möglich ist, wobei die Umgebungsreflexionen von perfekter Spiegelung der Umgebung bis zum völligen Fehlen der Spiegelung moduliert werden können.

Fig.1

## EP 0 862 141 A2

**Beschreibung**

Die Erfindung betrifft ein Bilddarstellungsverfahren zur Darstellung von computermodellierten Objekten gemäß dem Oberbegriff des Anspruchs 1 bzw. eine Vorrichtung zur Durchführung des Verfahrens gemäß dem Oberbegriff des Anspruchs 9.

In Computer-Grafiksystemen werden Objekte in der Regel durch Gittermodelle nachgebildet, wobei die Objekte durch die Raumkoordinaten der Knotenpunkte des Gittermodells sowie durch die optischen Eigenschaften, wie beispielsweise Farbe und Reflexionsverhalten, der zwischen den Knotenpunkten liegenden Polygonflächen definiert werden. Derartige Computer-Grafiksysteme sind beispielsweise aus VOORHIES, D.; FORAN, J.: Reflection Vector Shading Hardware, SIGGRAPH '94 und JACKÈL, D.; Rüsseler, H.: A Real Time Rendering System with Normal Vector Shading; 9th Eurographics Workshop on Graphics Hardware, Oslo (Norway), 1994 bekannt. Zur Berechnung des Bildeindrucks werden die einzelnen Polygonflächen in Rasterelemente (engl. Pixel) aufgeteilt, wobei für jedes Rasterelement die Position sowie die räumliche Lage der lokalen Flächennormale berechnet wird, die für das Reflexionsverhalten damit den Bildeindruck maßgebend ist. Durch eine Neigung der lokalen Flächennormale innerhalb der Polygonfläche ist es zum einen möglich, auch gekrümmte Polygonflächen zu simulieren, so daß an den Kanten zwischen benachbarten Polygonflächen ein knickfreier und damit optisch unauffälliger Übergang erreicht werden kann. Zum anderen ist es auf diese Weise auch möglich, rauhe Oberflächenstrukturen nachzubilden, indem die lokale Flächennormale innerhalb der jeweiligen Polygonfläche entsprechend der gewünschten Oberflächenstruktur geneigt wird, was auch als Bump-Mapping bezeichnet wird. Nach der Berechnung der Raumkoordinaten der einzelnen Rasterelemente und der jeweiligen lokalen Flächennormale wird dann für jedes Rasterelement individuell entsprechend einem lokalen Beleuchtungsmodell der Bildeindruck berechnet, wobei die Perspektive des Betrachters, die räumliche Lage sowie die optischen Eigenschaften des Rasterelements, die Ausrichtung der lokalen Flächennormale sowie die räumliche Lage und die optischen Eigenschaften der Lichtquellen berücksichtigt werden, welche die Objekte beleuchten.

Zur Berechnung des Bildeindrucks der einzelnen Rasterelemente wird in der Regel das in PHONG: Illumination for computer generated pictures; Communications of the ACM, 18(6):311-317, Juni 1975 beschriebene Beleuchtungsmodell verwendet, das auch in dem Quasi-Industriestandard OpenGL seinen Niederschlag gefunden hat. Dieses Beleuchtungsmodell ermöglicht vorteilhaft die Berücksichtigung vielfältiger optischer Effekte, wie beispielsweise ambienter, diffuser und spekularer Reflexion, und liefert somit einen sehr realistischen Bildeindruck.

Nachteilig bei den vorbekannten Bilddarstellungsverfahren der vorstehend beschriebenen Art ist jedoch, daß der Bildeindruck eines Rasterelements im wesentlichen nur von der räumlichen Lage des Rasterelements relativ zu den einzelnen Lichtquellen sowie von den optischen Eigenschaften des Rasterelements und der Lichtquellen abhängt. Wechselwirkungen zwischen den einzelnen Rasterelementen oder Objekten einer räumlichen Szene werden jedoch nur dadurch berücksichtigt, daß gegenseitige Abschattungen ermittelt und die abgeschatteten Rasterelemente bei der Darstellung unterdrückt werden (engl. hidden surface removal). Die mit den vorbekannten Bilddarstellungsverfahren erzeugten Bilder erscheinen deshalb wegen der weitgehend isolierten Berechnung der einzelnen Rasterelemente unabhängig voneinander künstlich.

Der Erfindung liegt somit die Aufgabe zugrunde, ein Bilddarstellungsverfahren zur Darstellung von computermodellierten Objekten zu schaffen, bei dem die einzelnen Objekte nicht isoliert, sondern als Bestandteil einer räumlichen Szene mit entsprechenden optischen Wechselwirkungen berücksichtigt werden, um einen möglichst natürlichen Bildeindruck zu erhalten.

Die Aufgabe wird, ausgehend von einem Bilddarstellungsverfahren gemäß dem Oberbegriff des Anspruchs 1, durch die kennzeichnenden Merkmale des Anspruchs 1 bzw. - hinsichtlich der Vorrichtung zur Durchführung des Verfahrens - durch die Merkmale des Anspruchs 9 gelöst.

Die Erfindung schließt die technische Lehre ein, den Bildeindruck für jedes Rasterelement nicht nur entsprechend dem lokalen Beleuchtungsmodell zu berechnen, sondern auch Reflexionen der Umgebung zu berücksichtigen, indem in Abhängigkeit von der räumlichen Lage der lokalen Flächennormale eine Speichermatrix adressiert und ein entsprechender Bildinformationswert ausgelesen wird, der den Umgebungseindruck aus einer bestimmten Perspektive wiedergibt.

Der Begriff lokales Beleuchtungsmodell ist hierbei und im folgenden nicht auf das vorstehend erwähnte und vorzugsweise verwendete Phong'sche Beleuchtungsmodell beschränkt, sondern umfaßt prinzipiell auch andere Beleuchtungsmodelle, welche die Berechnung des Bildeindrucks eines Rasterelements einer Polygonfläche in Abhängigkeit von den Beleuchtungsverhältnissen und den geometrischen Verhältnissen ermöglichen.

Die erfinderischen Maßnahmen lassen sich sowohl mit rein softwaremäßigen Maßnahmen als auch mittels geeigneter spezieller Hardware ausführen. Die hardwaremäßige Lösung hat dabei den Vorteil, daß sich insbesondere durch in parallel angeordneten Baugruppen (engl. Pipelines) gleichzeitig ausgeführte Operationen große Zeitvorteile erzielen lassen.

Wenn daher nachfolgend von "Baugruppen" die Rede ist, kann es sich dabei auch um Funktionsgruppen, beispielsweise in Form von elektrischen Schaltungen, handeln. Hierbei ist auch eingeschlossen, daß ein und dieselbe Bau- oder Funktionsgruppe nacheinander unterschiedliche Operationen ausführt, wie es bei der Prozessortechnik allgemein der Fall ist. Geschwindigkeitsvorteile lassen sich aber - wie erläutert - vor allen Dingen dann erzielen, wenn Funktionsgruppen parallel nebeneinander tätig sind.

Im Rahmen der erfindungsgemäßen Maßnahmen zur Darstellung von Objekten im Rahmen der Bildverarbeitung werden die einzelnen Polygonflächen vorzugsweise in mehrere parallele äquidistante Rasterzeilen (engl. Scanlines) aufgeteilt, in denen dann wiederum äquidistant die Rasterelemente angeordnet werden. Die Aufteilung der Polygonfläche erfolgt durch die erste Bau- oder Funktionsgruppe einer Recheneinheit, die an ihrem Eingang einen die räumliche Lage der Polygonfläche repräsentierenden ersten Parametersatz aufnimmt und an ihrem Ausgang eine Vielzahl von ersten Koordinatensätzen ausgibt, die die räumliche Lage jeweils eines Rasterelements repräsentieren. Die Berechnung des ersten Parametersatzes für jede Polygonfläche kann durch ein übergeordnetes Grafiksystem erfolgen, das mehrere der hier beschriebenen Recheneinheiten beinhalten kann, so daß es möglich ist, den Bildeindruck mehrerer Objekte einer räumlichen Szene parallel zu berechnen, wodurch die Rechenzeit bei komplexen Szenen drastisch verringert wird.

Weiterhin weist die Recheneinheit eine zweite Baugruppe auf, die für jedes Rasterelement der Polygonfläche einen zweiten Koordinatensatz berechnet, der die räumliche Lage der lokalen Flächennormale repräsentiert. Hierbei ist zu bemerken, daß die lokale Flächennormale nicht mit der Flächennormalen der gesamten Polygonfläche übereinstimmen muß, da die Polygonfläche vorzugsweise gekrümmt ist, um an den Kanten aneinandergrenzender Polygonflächen einen knickfreien, optisch unauffälligen Übergang zu erreichen. In einer möglichen Ausführungsform dieser Variante sind die Flächennormalen an den Eckpunkten der einzelnen Polygonflächen durch den ersten Parametersatz vorgegeben, der die räumliche Lage der Polygonfläche repräsentiert. Die Berechnung der lokalen Flächennormale für die einzelnen Rasterelemente der Polygonfläche erfolgt dann durch Interpolation der Eckpunktnormalen, was auch den Vorteil bietet, daß die lokalen Flächennormalen benachbarter Polygonflächen an den gemeinsamen Eckpunkten gleich sind und sich entlang der gemeinsamen Kante aufgrund der Interpolation allenfalls geringfügig unterscheiden, was zu einem im wesentlichen knickfreien und damit optisch unauffälligen Übergang zwischen benachbarten Polygonflächen führt.

Darüber hinaus ist eine dritte Baugruppe vorgesehen, die für jedes Rasterelement entsprechend dem lokalen Beleuchtungsmodell einen ersten Bildinformationswert berechnet. Die dritte Baugruppe nimmt hierzu eingangsseitig einen zweiten Parametersatz auf, der die räumliche Lage sowie die optischen Eigenschaften mindestens einer ersten Lichtquelle repräsentiert. So enthält der zweite Parametersatz vorzugsweise für jede Lichtquelle deren Raumkoordinaten, die Vektorkomponenten der Hauptabstrahlrichtung, die ambiente, diffuse und spekulare Farbe der Lichtquelle sowie gegebenenfalls einen sogenannten Spotlight-Cutoff-Winkel, der den Öffnungswinkel des Abstrahlkegels angibt, außerhalb dessen ein Betrachter die Lichtquelle nicht mehr wahrnimmt. Darüber hinaus ist die dritte Baugruppe eingangsseitig mit der ersten Baugruppe verbunden, um den ersten Koordinatensatz aufzunehmen, der die räumliche Lage des Rasterelements repräsentiert. Zur Aufnahme des zweiten Koordinatensatzes, der die Ausrichtung der lokalen Flächennormale repräsentiert, ist die dritte Baugruppe eingangsseitig mit der zweiten Baugruppe verbunden.

Weiterhin weist die Recheneinheit eine vierte Baugruppe auf, die für jedes Rasterelement in Abhängigkeit von der Perspektive des virtuellen Betrachters die Position des Rasterelements auf einem Bildschirm berechnet. Die vierte Baugruppe ist hierzu eingangsseitig mit der ersten Baugruppe verbunden und berechnet aus den ersten Koordinatensätzen, die die räumliche Lage der einzelnen Rasterelemente repräsentieren, jeweils einen zweidimensionalen Bildschirmdatensatz, der die horizontale und vertikale Position repräsentiert, an der das jeweilige Rasterelement innerhalb des Bildschirmkoordinatensystems erscheinen muß, um die gewünschte Perspektive zu erzeugen.

Bei der Berechnung des Bildeindrucks für die einzelnen Rasterelemente wird entsprechend dem lokalen Beleuchtungsmodell jeweils ein Bildinformationswert berechnet, der bei einer Verwendung des bekannten RGB-Farbmodells beispielsweise die Intensität der drei Grundfarben wiedergibt. Der Begriff Bildinformationswert ist jedoch nicht auf die Wiedergabe der drei Grundfarben entsprechend dem RGB-Farbmodell beschränkt, sondern umfaßt bei einer Verwendung anderer Farbmodelle, wie beispielsweise des CMYK-Farbmodells oder des HSB-Farbmodells, auch die Wiedergabe der entsprechenden Parameter. Darüber hinaus ist es bei einer monochromen Darstellung auch möglich, als Bildinformationswert lediglich die Grautönung des jeweiligen Rasterelements zu berechnen. Entscheidend ist hierbei also lediglich, daß der Bildinformationswert den Bildeindruck des jeweiligen Rasterelements wiedergibt und eine entsprechende Ansteuerung eines Bildschirms zur Wiedergabe ermöglicht.

Gemäß der Erfindung wird jedoch bei der Bestimmung des Bildeindrucks der einzelnen Rasterelemente nicht nur der entsprechend dem lokalen Beleuchtungsmodell berechnete erste Bildinformationswert berechnet. Es ist vielmehr vorgesehen, für die einzelnen Rasterelemente jeweils einen zweiten Bildinformationswert zu berechnen, der die Reflexionen der Umgebung in dem jeweiligen Rasterelement wiedergibt. Hierzu ist eine erste Speichermatrix vorgesehen, die in jedem Speicherplatz einen zweiten Bildinformationswert enthält, der den Bildeindruck der Umgebung aus einer bestimmten Perspektive enthält. Die Adressierung erfolgt durch einen Adreßwert, der von einer ersten Recheneinheit in Abhängigkeit von dem die räumliche Lage der lokalen Flächennormale wiedergebenden zweiten Koordinatensatz und/oder dem die Position des virtuellen Betrachters wiedergebenden dritten Parametersatz berechnet wird. Anschließend wird dann aus der Speichermatrix der zweite Bildinformationswert ausgelesen, der Reflexionen der Umgebung wiedergibt und von einer zweiten Recheneinheit mit dem ersten Bildinformationswert gemischt, der entsprechend dem lokalen Beleuchtungsmodell berechnet wurde, so daß der Benutzer die Möglichkeit hat, durch Vorgabe von Gewichtungsfaktoren zu bestimmen, in welchem Maße die Reflexionen der Umgebung berücksichtigt werden. Die Gewichtung der Umgebungsreflexionen wird jedoch vorzugsweise an den Reflexionsgrad gekoppelt, der für die jeweilige Polygonfläche als Materialeigenschaft vorgegeben wird. So sind Umgebungsreflexionen auf einer stumpfen Oberfläche beispielsweise eines Kreidestükkes kaum zu erkennen, während eine verspiegelte Oberfläche die Umgebung sehr gut reflektiert.

Die Speichermatrix bildet hierbei vorzugsweise eine kubische Hüllfläche (engl. environment cube) nach, in deren Mittelpunkt das jeweilige Rasterelement liegt, wobei jedem Flächenelement der Hüllfläche ein Speicherplatz der Speichermatrix zugeordnet ist, dessen Inhalt den Bildeindruck der Umgebung in der jeweiligen Richtung wiedergibt. Die kubische Hüllfläche stellt also quasi eine Rundumaufnahme der Umgebung aus der Perspektive der einzelnen Rasterelemente dar.

Bei der Annahme idealer Spiegelreflexion an dem jeweiligen Rasterelement nimmt der Betrachter den Bereich der Umgebung wahr, der von dem reflektierten Augvektor geschnitten wird. Die zur Berechnung des Adreßwertes dienende erste Recheneinheit berechnet hierbei aus dem die Position des virtuellen Betrachters wiedergebenden dritten Parametersatz und dem die räumliche Lage des jeweiligen Rasterelements wiedergebenden ersten Koordinatensatz zunächst den Augvektor, also die Verbindungslinie zwischen dem Betrachter und dem jeweiligen Rasterelement, die auch als Sehstrahl bezeichnet wird. Anschließend wird dann aus dem Augvektor und dem die räumliche Lage der lokalen Flächennormale wiedergebenden zweiten Koordinatensatz der reflektierte Augvektor berechnet und der Schnittpunkt des reflektierten Augvektors mit der kubischen Hüllfläche ermittelt. Der Betrachter sieht dann den Bereich der kubischen Hüllfläche, der von dem reflektierten Augvektor geschnitten wird. Die zweite Recheneinheit berechnet hierzu aus dem reflektierten Augvektor den Adreßwert für den Speicherplatz der Speichermatrix, der den Bildinformationswert für das zugehörige Flächenelement der kubischen Hüllfläche enthält.

Die Erfindung ist jedoch nicht auf die ausschließliche Berücksichtigung spekularer Reflexion an dem jeweiligen Rasterelement beschränkt. Es ist vielmehr auch möglich, stattdessen oder zusätzlich diffuse Reflexionen der Umgebung zu berücksichtigen. Die Adressierung der Speichermatrix erfolgt hierbei in Abhängigkeit von dem die räumliche Lage der lokalen Flächennormale wiedergebenden zweiten Koordinatensatz, da die Position des Betrachters bei der diffusen Reflexion keinen Einfluß auf den Bildeindruck hat. Die Vorgabe des Umgebungseindrucks kann hierbei für spekulare und diffuse Reflexion durch dieselbe Speichermatrix erfolgen, jedoch ist es zur Erzielung besonderer optischer Effekte auch möglich, unterschiedliche Umgebungen für spekulare und diffuse Reflexion vorzusehen, die in unterschiedlichen Speichermatrizen oder in verschiedenen Speicherbereichen derselben Speichermatrix abgelegt sind.

Bei den vorstehend beschriebenen Varianten der Erfindung erfolgt die Berechnung der Umgebungsreflexionen also für die diffuse Reflexion in Abhängigkeit von der lokalen Flächennormale und für die spekulare Reflexion in Abhängigkeit von der Position des virtuellen Betrachters einerseits und der lokalen Flächennormale andererseits. In einer weiterbildenden Variante der Erfindung ist darüber hinaus vorgesehen, auch die Position des jeweiligen Rasterelements bzw. der ganzen Polygonfläche zu berücksichtigen.

Hierzu wird in Abhängigkeit von der Position des Rasterelements bzw. der Polygonfläche aus dem vorgegebenen, die räumliche Lage der Polygonfläche wiedergebenden ersten Parametersatz oder dem die Position des jeweiligen Rasterelements repräsentierenden ersten Koordinatensatz ein Auswahlwert bestimmt. Dieser Auswahlwert dient dann zur positionsabhängigen Auswahl der ersten bzw. zweiten Speichermatrix aus einer Vielzahl von Speichermatrizen, die jeweils unterschiedliche Umgebungen wiedergeben. Stattdessen ist es jedoch auch möglich, den Auswahlwert zur Adressierung der ersten bzw. zweiten Speichermatrix heranzuziehen und innerhalb der Speichermatrix einen Speicherbereich positionsabhängig auszuwählen. Auf diese Weise ist es möglich, innerhalb der räumlichen Szene unterschiedliche Umgebungen zu berücksichtigen, was zu einem natürlicheren Bildeindruck führt, als bei der Berücksichtigung einer für alle Rasterelemente einheitlichen globalen Umgebung.

Die Speichermatrizen bilden - wie bereits vorstehend erläutert - in der Regel eine kubische Hüllfläche um das jeweilige Rasterelement nach und definieren eine Rundumaufnahme aus der Perspektive des jeweiligen Rasterelements bzw. der jeweiligen Polygonfläche, wobei jedem Speicherplatz der Speichermatrix eindeutig ein Raumwinkelbereich der Umgebung zugeordnet ist. In einer weiterbildenden Variante der Erfindung definieren die Speichermatrizen dagegen jeweils nur einen Teil - im folgenden auch als Muster bezeichnet - der Umgebung, der sich jedoch auf der kubischen Hüllfläche wiederholt. Bei der Simulation eines bewölkten Himmels als Umgebung ist es beispielsweise nicht erforderlich, den Himmel aus allen möglichen Blickrichtungen zu definieren. Es reicht vielmehr aus, eine oder zwei Wolken vor blauem Hintergrund zu definieren und dieses Muster auf der kubischen Hüllfläche zu wiederholen. Die Speichermatrix könnte dann beispielsweise ein Viertel einer Seite der kubischen Hüllfläche definieren, so daß das vorgegebene Muster auf der kubischen Hüllfläche insgesamt 24 mal erscheint. Hierdurch läßt sich vorteilhaft die optische Auflösung der Umgebungsdarstellung erhöhen, da jedem Speicherplatz bei gleichbleibender Größe der Speichermatrix ein kleinerer Raumwinkelbereich der Umgebung zugeordnet ist. Wird dagegen keine erhöhte optische Auflösung der Umgebungsdarstellung gewünscht, so läßt sich die Umgebung bei gleichbleibender optischer Auflösung vorteilhaft mit einer kleineren Speichermatrix darstellen. Wichtig ist hierbei, daß die Adressierung der Speichermatrix anders erfolgen muß als bei bei den zuvor beschriebenen Varianten der Erfindung, bei denen die Speichermatrix jeweils eine vollständige Rundumaufnahme der Umgebung definiert. Zunächst wird der Adressierungsverktor berechnet, der bei diffuser Reflexion der lokalen Flächennormalen und bei spekularer Reflexion dem reflektierten Augvektor entspricht. Anschließend müssen dann die Koordinaten des Flächenelements ermittelt werden, das von dem Adressierungsvektor getroffen wird. Aus diesen Koordinaten wird dann bestimmt, welches Flächenelement des vorgebenenen Musters an dieser Stelle liegt und welcher Speicherplatz der Speichermatrix zu adressieren ist. In dieser Variante der Erfindung ist also zur Adressierung der Speichermatrix eine zusätzliche Koordinatentransformation erforderlich von den Koordinaten des vom Adressierungsvektor geschnittenen Flächenelements auf der kubischen Hüllfläche in die Koordinaten innerhalb des vorgegebenen Musters.

In der bevorzugten Ausführungsform dieser Variante wird das vorgegebene Muster derart berechnet, daß die Stoßkanten benachbarter Muster auf der kubischen Hüllfläche trotz der Wiederholung des Musters nicht sichtbar sind. Dies setzt voraus, daß zwischen benachbarten Mustern entlang den Stoßkanten keine Intensitäts- oder Farbsprünge auftreten. Zur Vermeidung des sogenannten Mach-Band-Effekts ist es darüber hinaus vorteilhaft, das Muster derart zu berechnen, daß die Änderung der Intensitäts- bzw. Farbwerte zwischen benachbarten Mustern über die Stoßkante hinweg konstant ist. Da die Muster in der Praxis oftmals von bestehenden Bildvorlagen übernommen werden und die vorstehend beschriebenen Anforderungen deshalb meist nicht erfüllen, kann eine entsprechende Korrektur der Intensitäts- bzw. Farbwerte auch nach dem Einlesen der Mustervorlage erfolgen. So ist es beispielsweise möglich, eine in Papierform vorliegende Mustervorlage zu digitalisieren und in die Speichermatrix einzulesen. Anschließend wird das digitalisierte Muster mittels einer Bildverarbeitungseinheit bearbeitet, um die vorstehend beschriebenen optischen Störungen an den Stoßkanten zu verhindern. Diese Bearbeitung des eingelesenen Musters erfolgt vorzugsweise durch eine separate Bildverarbeitungseinheit, die mit der Speichermatrix verbunden ist und die Bildinformationswerte in den einzelnen Speicherplätzen in der Umgebung der Stoßkanten entsprechend angleicht.

In einer weiterbildenden Variante der Erfindung ist darüber hinaus vorgesehen, bei der Berechnung des Bildeindrucks der einzelnen Rasterelemente nicht nur die Schattierung entsprechend dem lokalen Beleuchtungsmodell und die Reflexionen der Umgebungen in der Objektoberfläche, sondern auch die Oberflächenstruktur (engl. Texture) des Objekts zu berücksichtigen. Hierzu ist eine weitere Speichermatrix vorgesehen, wobei jedes Rasterelement der jeweiligen Polygonfläche einem Speicherplatz dieser Speichermatrix zugeordnet ist. Die Adressierung dieser Speichermatrix erfolgt durch eine Adressierungseinheit, die aus dem die räumliche Lage der Polygonfläche wiedergebenden ersten Parametersatz und dem die räumliche Lage des jeweiligen Rasterelements wiedergebenden ersten Koordinatensatz einen Adreßwert berechnet, der die räumliche Lage des Rasterelements innerhalb der Polygonfläche wiedergibt. Wichtig ist hierbei, daß der Adreßwert nicht von der räumlichen Lage der Polygonfläche als Ganzes abhängt, sondern ausschließlich durch die Lage des Rasterelementes innerhalb der Polygonfläche bestimmt wird, da die Oberflächenstruktur andernfalls bei einer Bewegung des Objekts auf der Objektoberfläche "wandern" würde. Aus dem auf diese Weise adressierten Speicherplatz der dritten Speichermatrix wird dann ein Bildinformationswert ausgelesen, der die Oberflächenstruktur der Polygonfläche in dem jeweiligen Rasterelement wiedergibt. Die Berechnung des zur Ansteuerung des Bildschirms dienenden Bildinformationswertes erfolgt dann durch die zweite Recheneinheit in Abhängigkeit von dem ausgelesenen Oberflächenstrukturwert. Die vorstehend beschriebene Variante der Erfindung ermöglicht vorteilhaft eine Simulation einer strukturierten Oberfläche, ohne die Oberflächendetails aufwendig modellieren und berechnen zu müssen.

Bei den vorstehend beschriebenen Varianten der Erfindung ist es nicht erforderlich, daß der Bildeindruck der Umgebung zeitlich konstant ist. Es ist vielmehr auch möglich, zeitlich veränderliche Umgebungen zu berücksichtigen. Dies kann beispielsweise dadurch geschehen, daß jeweils Momentaufnahmen der Umgebungen in verschiedenen Speichermatrizen abgespeichert werden und zeitlich gesteuert zwischen den verschiedenen Speichermatrizen umgeschaltet wird.

Der Körper bzw. die Fläche, die auf dem Bildschirm dargestellt werden soll, wird - wie bereits vorstehend beschrieben - im Computer als Gittermodell nachgebildet. Die Oberfläche besteht deshalb aus zahlreichen Polygonflächen, deren räumliche Lage durch die Raumkoordinaten der Knotenpunkte des Gittermodells definiert ist. In einer vorteilhaften Ausführungsform der Erfindung werden als Polygonflächen Dreiecke verwendet. Dies bedeutet, daß im Gittermodell jeweils drei Punkte durch Kanten miteinander verbunden sind. Die Verwendung von Dreiecken zur Modellierung der Oberflächen hat den Vorteil, daß die Flächennormale eines Dreiecks durch die Raumkoordinaten der Eckpunkte eindeutig definiert ist, da drei Punkte immer in einer Ebene liegen, während bei Polygonen mit mehr als drei Eckpunkten die Möglichkeit besteht, daß die Eckpunkte nicht exakt in einer Ebene liegen, so daß auch die Flächennormale nicht exakt definiert ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1            als bevorzugtes Ausführungsbeispiel der Erfindung eine Recheneinheit zur Darstellung von compu-
                  termodellierten Objektes als Bestandteil eines umfassenden Computer-Grafiksystems,

Figur 2a, 2b      exemplarisch eine Polygonfläche eines computermodellierten Objekts zur Veranschaulichung der
                  Aufteilung der Polygonfläche in Rasterzeilen und Rasterelemente,

Figur 3           eine schematische Darstellung der Beleuchtungssituation eines Rasterelements zur Veranschaulichung des lokalen Beleuchtungsmodells sowie

Figur 4a, 4b      jeweils eine kubische Hüllfläche um ein Rasterelement zur Veranschaulichung der Berechnung von
                  Umgebungsreflexionen bei diffuser bzw. spekularer Reflexion.

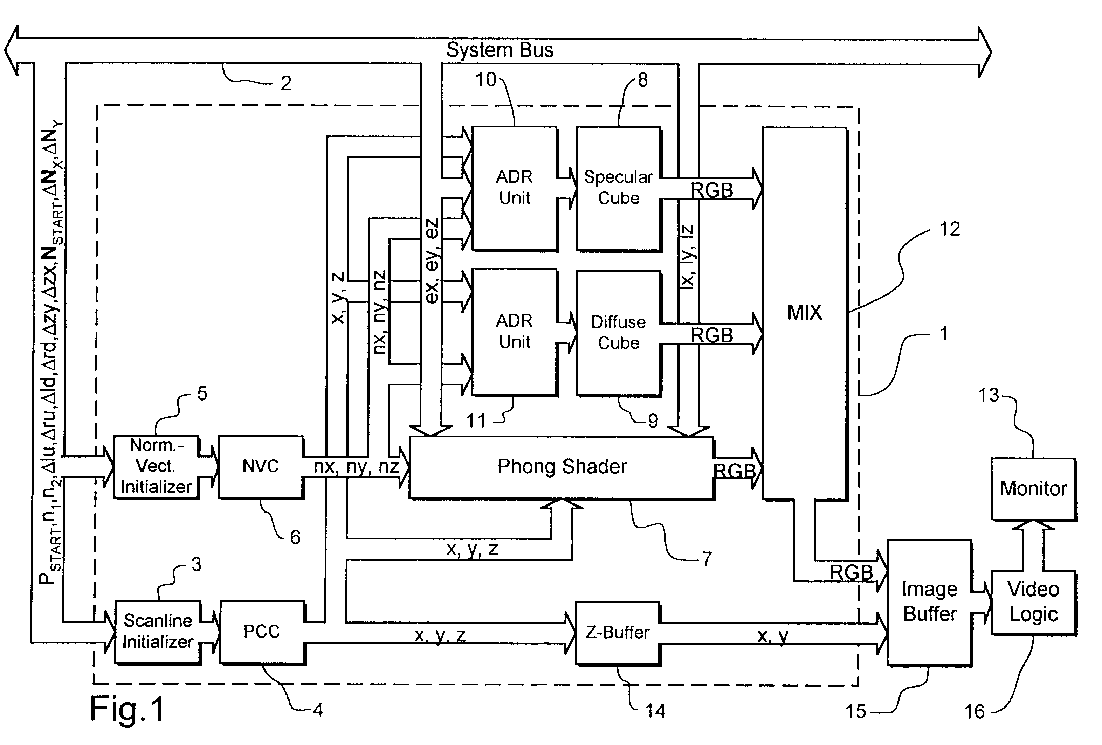

Figur 1 zeigt eine Recheneinheit 1, die eine Darstellung von computer-modellierten Objekten ermöglicht und Bestandteil eines umfassenden Computer-Grafiksystems ist, von dem hier lediglich ein Systembus 2 dargestellt ist. Die
einzelnen Objekte sind hierbei in dem Grafiksystem als Gittermodell gespeichert und durch die Raumkoordinaten der
Knotenpunkte des Gittermodells sowie durch die optischen Eigenschaften der zwischen den Knotenpunkten liegenden
dreieckigen Polygonflächen - beispielsweise die Farbe und die Reflexionseigenschaften - definiert.

Die dargestellte Recheneinheit 1 berechnet nacheinander den Bildeindruck sämtlicher Polygonflächen der einzelnen Objekte, wobei die räumliche Lage der jeweiligen Polygonfläche, die gewünschte Perspektive sowie die Beleuchtungssituation von dem Grafiksystem über den Systembus 2 vorgegeben werden. Die Recheneinheit 1 erhält hierzu
von dem Grafiksystem über den Systembus 2 für jede darzustellende Polygonfläche einen Parametersatz, der die
räumliche Lage sowie die optischen Eigenschaften der jeweiligen Polygonfläche wiedergibt und eine Feinaufteilung
der Polygonfläche in eine Vielzahl von Rasterelementen ermöglicht, die jeweils in Rasterzeilen angeordnet sind. So
enthält der Parametersatz die Raumkoordinaten $(x_S, y_S, z_S)$ eines Eckpunkts $P_{Start}$ des Dreiecks, die Kanteninkremente $\Delta lu$, $\Delta ru$, $\Delta ld$, $\Delta rd$, die Anzahl der Rasterzeilen $n_1$, $n_2$ des Dreiecks, sowie die Neigung $\Delta zx$ der Dreiecksfläche zur
X-Achse und die Neigung $\Delta zy$ der Dreiecksfläche zur Y-Achse. Darüber hinaus enthält der Parametersatz die Koordinaten der lokalen Flächennormale $N_{Start}$ in dem vorgegeben Eckpunkt sowie die Vektorinkremente $\Delta N_x$, $\Delta N_y$, die eine
Berechnung der lokalen Flächennormale in jedem Rasterelement der Dreiecksfläche ermöglichen. Die Dreiecksfläche
ist also nicht notwendigerweise eben, sondern in der Regel gekrümmt. Zum einen ermöglicht dies eine Anpassung
der Krümmung an einen vorgegebenen Oberfächenverlauf der Objekte. Zum anderen ist es auf diese Weise möglich,
an den Kanten zwischen benachbarten Dreiecks flächen einen knickfreien und damit optisch unauffälligen Übergang
zu erreichen. Weiterhin enthält der Parametersatz Informationen über die Farbe der Dreiecksoberfläche, das Absorptionsverhalten, die Durchsichtigkeit der Dreiecksfläche und ähnliches.

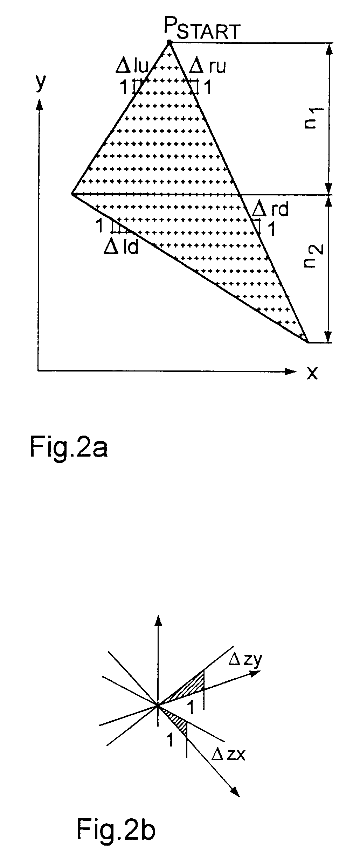

Der von dem übergeordneten Grafiksystem gelieferte Parametersatz wird in der Recheneinheit 1 unter anderem
einer Baugruppe 3 (engl. Scanline Initializer) zugeführt, die die Dreiecksfläche zunächst in eine Vielzahl von Rasterzeilen aufteilt und für jede Rasterzeile die Raumkoordinaten des Anfangspunkts $(x_l, y_l, z_l)$ und des Endpunkts $(x_r, y_r,
z_r)$ berechnet. Die Figuren 2a unnd 2b zeigen eine derartige Dreiecksfläche zur Veranschaulichung der Aufteilung in
Rasterelemente. Die einzelnen Rasterzeilen liegen jeweils parallel zur X-Achse und äquidistant zueinander, so daß
sich die Y-Koordinate sämtlicher Rasterelemente einer Rasterzeile aus der Y-Koordinate $y_S$ des vorgegebenen Eckpunkts $P_{Start}$ und der Nummer $i$ der Rasterzeile ergibt. Für die Y-Koordinaten von Anfangspunkt und Endpunkt der
einzelnen Rasterzeilen gilt also:

$$y_l = y_S + i \qquad y_r = y_S + i$$

Die X-Koordinate $x_l$ des Anfangspunkts jeder Rasterzeile ergibt sich entsprechend aus der X-Koordinate $x_S$ des
vorgegebenen Startpunkts $P_{start}$, der Nummer $i$ der Rasterzeile sowie dem Kanteninkrement $\Delta lu$ bzw. $\Delta ld$. Innerhalb
der ersten $n_1$ Rasterzeilen wird hierbei das Kanteninkrement $\Delta lu$ und anschließend das Kanteninkrement $\Delta ld$ verwendet.

$$x_l = x_S + \Delta lu \cdot i \qquad \text{für } i \leq n_1$$

$$x_l = x_S + \Delta lu \cdot n_1 + (i - n_1) \cdot \Delta ld \qquad \text{für } n_1 < i \leq n_1 + n_2$$

In gleicher Weise ergibt sich die X-Koordinate $x_r$ des Endpunkts jeder Rasterzeile aus der X-Koordinate $x_S$ des Startpunkts $P_{start}$, der Nummer $i$ der Rasterzeile sowie dem Kanteninkrement $\Delta ru$ bzw. $\Delta rd$. Hierbei wird während der ersten $n_1$ Rasterzeilen das Kanteninkrement $\Delta ru$ und anschließend das Kanteninkrement $\Delta rd$ verwendet:

$$x_r = x_S + \Delta ru \cdot i \qquad \text{für } i \leq n_1$$

$$x_r = x_S + \Delta ru \cdot n_1 + (i - n_1) \cdot \Delta rd \qquad \text{für } n_1 < i \leq n_1 + n_2$$

Die Z-Koordinate $z_l$ des Anfangspunkts jeder Rasterzeile ergibt sich aus der Z-Koordinate $z_S$ des Startpunkts $P_{Start}$, der Nummer $i$ der Rasterzeile sowie den vorgegebenen Neigungen der Dreiecksfläche zur X-Achse und zur Y-Achse:

$$z_l = z_S - i \cdot \Delta zy + (x_l - x_S) \cdot \Delta zx$$

Die Baugruppe 3 gibt dann den vorgegebenen Neigungswert $\Delta zy$ der Dreiecksfläche sowie die Koordinaten von Anfangspunkt $(x_l, y_l, z_l)$ und Endpunkt $(x_r, y_r, z_r)$ jeweils einer Rasterzeile an eine nachgeschaltete Baugruppe 4 (engl. PCC - Pixel Coordinate Calculator), die die einzelnen Rasterzeilen in eine Vielzahl von Rasterelementen aufteilt und deren Koordinaten berechnet. Da die Rasterzeilen parallel zur X-Achse verlaufen, ist die Y-Koordinate jedes Rasterelements gleich der Y-Koordinate der zugehörigen Rasterzeile:

$$y_j = y_l$$

Die X-Koordinate jedes Rasterelements ergibt sich aus der X-Koordinate $x_l$ des Anfangspunkts der Rasterzeile, und der Nummer $j$ des Rasterelements in der Rasterzeile:

$$x_j = x_l + j$$

Die Z-Koordinate eines Rasterelements läßt sich in einfacher Weise aus der Z-Koordinate $z_l$ des Anfangspunkts der zugehörigen Rasterzeile, der Nummer $j$ des Rasterelements innerhalb der Rasterzeile und der Neigung $\Delta zx$ der Dreiecksfläche relativ zur X-Achse berechnen:

$$z_j = z_l + j \cdot \Delta zy$$

Die Baugruppe 4 berechnet also für jedes Rasterelement der Polygonfläche die Koordinaten, was Voraussetzung für eine spätere Berechnung des Bildeindrucks entsprechend einem lokalen Beleuchtungsmodell ist.

Der von dem übergeordneten Grafiksystem gelieferte Parametersatz, der die räumliche Lage jeweils eines Dreiecks wiedergibt, wird darüber hinaus einer weiteren Baugruppe 5 (engl. Normal Vector Initializer) zugeführt, welche die Komponenten $(xn_l, yn_l, zn_l)$ des Normalenvektors $N_l$ am Anfangspunkt jeder Rasterzeile berechnet. Der übernommene Parametersatz enthält hierzu die Komponenten $(xn_s, yn_s, zn_s)$ des Normalenvektors $N_S$ an dem vorgegebenen Eckpunkt $P_{Start}$ sowie die Vektorinkremente $\Delta N_x = (\Delta xn_x, \Delta yn_x, \Delta zn_x)$ und $\Delta N_y = (\Delta xn_y, \Delta yn_y, \Delta zn_y)$. Das Vektorinkrement $\Delta N_y$ gibt hierbei die Änderung des Normalenvektors beim Übergang zur jeweils nächsten Rasterzeile wieder, während das Vektorinkrement $\Delta N_x$ die Änderung des Normalenvektors zwischen zwei Rasterelementen einer Rasterzeile bestimmt.

Der Normalenvektor am Anfangspunkt einer Rasterzeile errechnet sich dann aus dem vorgegebenen Normalenvektor $N_{Start}$ an dem vorgegebenen Eckpunkt $P_{Start}$ des Dreiecks, der X-Koordinate $x_l$ des Anfangspunkts der Rasterzeile sowie aus den Vektorinkrementen $\Delta N_x$, $\Delta N_y$ und der Nummer $i$ der Rasterzeile:

$$N_{li} = N_{Start} + i\Delta N_y + (x_l - x_{Start})\Delta N_x$$

oder in Komponentenschreibweise:

$$xn_l = xn_S + i\Delta xn_y + (x_l\text{-}x_{Start})\Delta\,xn_x$$

$$yn_l = yn_S + i\Delta yn_y + (x_l\text{-}x_{Start})\Delta yn_x$$

$$zn_l = zn_S + i\Delta zn_y + (x_l\text{-}x_{Start})\Delta zn_x$$

Die Baugruppe 5 gibt dann für jeweils eine Rasterzeile die Komponenten des Normalenvektors am Anfangspunnkt der Rasterzeile sowie das Vektorinkrement $\Delta \boldsymbol{N}_x$ an eine nachgeschaltete Baugruppe 6 (engl. NVC - Normal Vector Calculator), die für jedes Rasterelement innerhalb der aktuellen Rasterzeile die lokale Flächennormale berechnet, die sich aus dem Normalenvektor $\boldsymbol{N}_{li}$ am Anfangspunkt der Rasterzeile, der Nummer $j$ des Rasterelements innerhalb der Rasterzeile sowie dem Vektorinkrement $\Delta \boldsymbol{N}_x$ nach der Formel

$$N = N_{li} + j\Delta N_x$$

oder in Komponentenschreibweise

$$xn = xn_l + j\Delta xn_x$$

$$yn = yn_l + j\Delta yn_x$$

$$zn = zn_l + j\Delta zn_x$$

ergibt.

Die von der Baugruppe 4 berechneten Koordinaten jeweils eines Rasterelements sowie die von der Baugruppe 6 ermittelten Komponenten des Normalenvektors am Ort des jeweiligen Rasterelements werden dann einer weiteren Baugruppe 7 zugeführt, die den Bildeindruck des jeweiligen Rasterelements entsprechend einem lokalen Beleuchtungsmodell berechnet. Neben der Information über die räumliche Position und die Ausrichtung des jeweiligen Rasterelements benötigt die Baugruppe 7 hierzu Informationen über die Beleuchtungssituation sowie über die gewünschte Perspektive. Das übergeordnete Grafiksystem liefert hierzu über den Systembus einen Parametersatz $ex$, $ey$, $ez$, der die Position eines virtuellen Betrachters und damit die Perspektive bestimmt. darüber hinaus erhält die Baugruppe 7 für jede Lichtquelle einen Parametersatz, der die Position $lx$, $ly$, $lz$, die Hauptabstrahlrichtung und die Intensität der Lichtquelle wiedergibt.

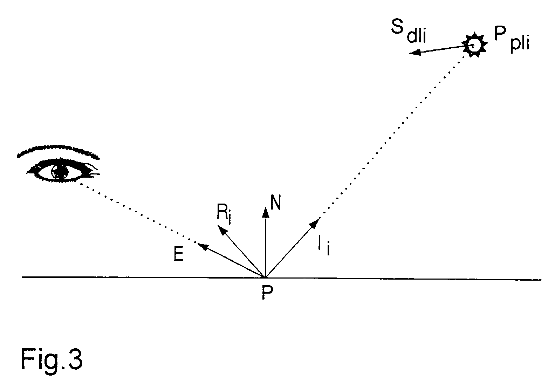

Die Berechnung des Bildeindrucks des jeweiligen Rasterelements erfolgt dann getrennt für die drei Grundfarben Rot, Grün und Blau des RGB-Farbmodells entsprechend dem in Figur 3 schematisch dargestellten Phong'schen Beleuchtungsmodell nach der Formel:

$$c = e_{cm} + a_{cm} \cdot a_{cs} + \sum_{i=0}^{n-1}\left(att_i\right)\left(spot_i\right)\left[a_{cm}\cdot a_{cli} + \left(\vec{n}\cdot\vec{l}_i\right)d_{cm}\cdot d_{cli} + \left(\vec{r}_i\cdot\vec{e}\right)^{s_{rm}} s_{cm}\cdot s_{cli}\right]$$

mit

$$att_i = \frac{1}{k_{0i} + k_{1i}\left\|\vec{l}_i\right\| + k_{2i}\left\|\vec{l}_i\right\|^2} \qquad (\mathrm{Entfernungsabsch\ddot{a}chung})$$

$$spot_i = \begin{cases} -\left(\vec{l}_i \cdot \vec{s}_{dli}\right)^{s_{rli}} & \text{Rasterelement innerhalb des Cutoff-Winkels } c_{rli} \\ 0 & \text{sonst} \end{cases}$$

<div align="right">(Spotlight-Abschwächung)</div>

| | |
|---|---|
| $a_{cm}, d_{cm}, s_{cm}$ | ambiente, diffuse bzw. spekulare Farbe des Materials |
| $e_{cm}$ | emissive Farbe des Materials |
| $s_{rm}$ | spekularer Exponent des Materials |
| $a_{cli}, d_{cli}, s_{cli}$ | ambiente, diffuse bzw. spekulare Farbe von Lichtquelle $i$ |
| $P_{pli}$ | Position von Lichtquelle $i$ |
| $s_{dli}$ | Hauptabstrahlrichtung von Lichtquelle $i$ |
| $s_{rli}$ | Spotlight-Exponent von Lichtquelle $i$ |
| $c_{rli}$ | Spotlight-Cutoff-Winkel von Lichtquelle $i$ |
| $k_{0i}, k_{1i}, k_{2i}$ | konstante, lineare und quadratische Entfernungsabschwächung von Lichtquelle $i$ |
| $a_{cs}$ | ambiente Farbe der Szene |

Die vorstehend beschriebene Berechnung des Bildeindrucks der einzelnen Rasterelemente nach dem Phong'schen Beleuchtungsmodell ermöglicht vorteilhaft eine quasi-kontinuierliche Schattierung der einzelnen Polygonflächen ohne störende Intensitätssprünge, berücksichtigt jedoch keine Wechselwirkungen der einzelnen Rasterelemente untereinander oder mit der Umgebung.

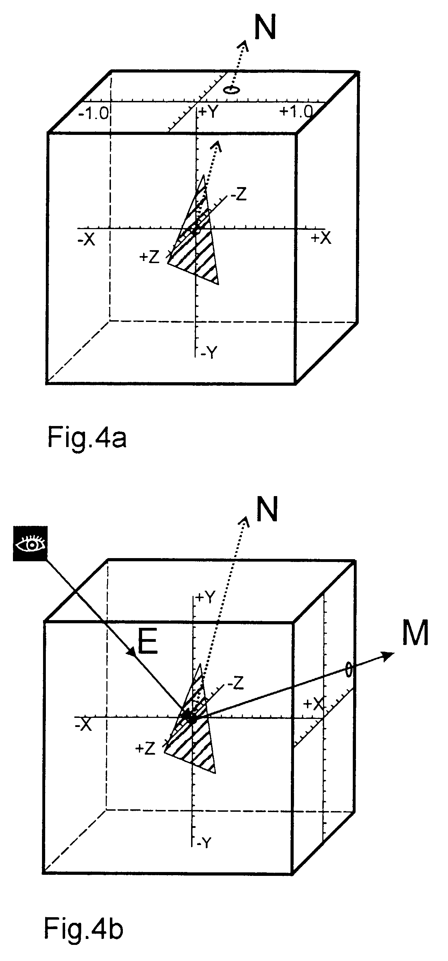

Die dargestellte Recheneinheit 1 berechnet deshalb zusätzlich die Reflexionen der Umgebung an der jeweiligen Objektoberfläche, wobei diffuse Reflexion und spekulare Reflexion unabhängig voneinander berücksichtigt werden können. Hierzu weist die Recheneinheit 1 zwei Speicherelemente 8, 9 mit einer Vielzahl von Speicherplätzen auf, wobei jeder Speicherplatz der Speicherelemente 8, 9 einen Bildinformationswert enthält, der den Bildeindruck der Umgebung aus einer bestimmten Perspektive wiedergibt. Die Speicherelemente 8, 9 bilden also - wie in Figur 4a und 4b dargestellt - jeweils kubische Hüllflächen nach, die das jeweilige Rasterelement umgeben, wobei jeder Speicherplatz des Speicherelements 8, 9 einem Flächenelement der Hüllfläche zugeordnet ist und den Bildeindruck der Umgebung in der jeweiligen Richtung definiert. Die kubischen Hüllflächen sind also quasi Rundumaufnahmen der Umgebung aus der Perspektive der einzelnen Rasterelemente.

Jedes Speicherelement 8, 9 bildet hierbei eine Vielzahl von kubischen Hüllflächen nach, um innerhalb der räumlichen Szene positionsabhängig unterschiedliche Umgebungsreflexionen berücksichtigen zu können. Die verschiedenen Umgebungen sind hierbei in den beiden Speicherelementen 8, 9 in unterschiedlichen Speicherbereichen definiert.

Die Auswahl der Speicherbereiche erfolgt jeweils durch eine Adressierungseinheit 10, 11, die eingangsseitig mit der Baugruppe 4 verbunden ist, um den Parametersatz aufzunehmen, der die räumliche Lage des jeweiligen Rasterelements wiedergibt. Die Adressierungseinheiten 10, 11 bestimmen dann in Abhängigkeit von der Position des Rasterelements, welche Umgebung zu berücksichtigen ist und wählen den zugehörigen Speicherbereich in den Speicherelementen 8, 9 aus.

Darüber hinaus haben die Adressierungseinheiten 10, 11 die Aufgabe, innerhalb der positionsabhängig ausgewählten Speicherbereiche die Speicherplätze zu adressieren, die den Bildeindruck der an dem Objekt reflektierten Umgebung wiedergeben.

Bei der diffusen Reflexion erfolgt diese Adressierung ausschließlich in Abhängigkeit von der lokalen Flächennormale, da die Position des Betrachters hierbei ohne Einfluß ist. Die Adressierungseinheit 11 ist deshalb eingangsseitig zur Aufnahme des die räumliche Lage der lokalen Flächennormale repräsentierenden zweiten Koordinatensatzes mit der Baugruppe 6 verbunden und ermittelt - wie in Figur 4a dargestellt - den Schnittpunkt der lokalen Flächennormale N mit der kubischen Hüllfläche.

Bei der spekularen Reflexion der Umgebung an dem jeweiligen Rasterelement erfolgt die Adressierung dagegen in Abhängigkeit von der Position des virtuellen Betrachters einerseits und der räumlichen Lage der lokalen Flächennormale andererseits. Die Adressierungseinheit 10 berechnet deshalb aus der Position des Betrachters und der Position des jeweiligen Rasterelements zunächst - wie in Figur 4b dargestellt - den Augvektor E, also die Verbindungslinie zwischen dem virtuellen Betrachter und dem Rasterelement. Anschließend wird dann aus dem Augvektor E und der lokalen Flächennormale N der reflektierte Augvektor M berechnet und der Schnittpunkt des reflektierten Augvektors M mit der kubischen Hüllfläche ermittelt. Anschließend adressiert die Adressierungseinheit 10 den zugehörigen Speicherplatz des Speicherelements 8 und liest den zugehörigen Bildinformationswert aus.

Die Recheneinheit 1 berechnet die Bildinformationswerte der einzelnen Rasterelemente also zum einen entsprechend dem Phong'schen Beleuchtungsmodell und ermittelt zum anderen den Bildeindruck, der sich aus diffuser und spekularer Reflexion der Umgebung an dem jeweiligen Rasterelement ergibt. Die resultierenden drei Bildinformationswerte werden dann einer weiteren Recheneinheit 12 zugeführt, die entsprechend vorgegebenen Gewichtungsfaktoren den endgültigen Bildinformationswert berechnet.

Zur Darstellung auf einem Bildschirm 13 ist es weiterhin erforderlich, die dreidimensionalen Koordinaten der einzelnen Rasterelemente in ein zweidimensionales Bildschirmkoordinatensystem umzurechnen, das die Position des jeweiligen Rasterelements auf dem Bildschirm angibt. Die von der Baugruppe 4 berechneten Koordinaten werden deshalb einer auch als Z-Filter bezeichneten Baugruppe 14 zugeführt, die für jedes Rasterelement die Bildschirmkoordinaten berechnet.

Der Bildschirmkoordinatensatz dient dann zur Adressierung eines Bildschirmspeichers 15, der die Bildinformationswerte der einzelnen Rasterelemente von der Baugruppe 7 übernimmt.

Nach der Berechnung sämtlicher Rasterelemente aller Polygonflächen enthält der Bildschirmspeicher 15 ein perspektivisches Bild der virtuellen räumlichen Szene. Die Wiedergabe dieses Bildes erfolgt dann durch eine eingangsseitig mit dem Bildschirmspeicher 15 verbundene Bildschirmtreiberschaltung 16 und den Bildschirm 13.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

**Patentansprüche**

1. Bilddarstellungsverfahren zur Darstellung von computermodellierten Objekten, die in Form eines Gittermodells vorliegen und durch mehrere aneinandergrenzende Polygonflächen nachgebildet werden, bei dem

mittels einer ersten Baugruppe (3, 4) aus einem vorgegebenen, die räumliche Lage jeweils einer der Polygonflächen repräsentierenden ersten Parametersatz eine Vielzahl von ersten Koordinatensätzen berechnet wird, die die räumliche Lage jeweils eines Rasterelements der jeweiligen Polygonfläche repräsentieren,
mittels einer zweiten Baugruppe (5, 6) für jedes Rasterelement der Polygonfläche aus dem die räumliche Lage der Polygonfläche repräsentierenden ersten Parametersatz jeweils ein zweiter Koordinatensatz berechnet wird, der die räumliche Lage der lokalen Flächennormale (N) repräsentiert,
daß mittels einer dritten Baugruppe (7) aus den die räumliche Lage der einzelnen Rasterelemente repräsentierenden ersten Koordinatensätzen und den die räumliche Lage der lokalen Flächennormale (N) repräsentierenden zweiten Koordinatensätzen und einem vorgegebenen, die räumliche Lage sowie die optischen Eigenschaften mindestens einer ersten Lichtquelle repräsentierenden zweiten Parametersatz sowie einem vorgegebenen, die Position eines virtuellen Betrachters wiedergebenden dritten Parametersatz entsprechend einem lokalen Beleuchtungsmodell ein erster Bildinformationswert berechnet wird, der einen Bildeindruck des jeweiligen Rasterelements aus der Perspektive des Betrachters wiedergibt,
mittels einer vierten Baugruppe (14) für jedes Rasterelement aus dem die räumliche Lage des jeweiligen Rasterelements repräsentierenden ersten Koordinatensatz zur Darstellung auf einem Bildschirm (13) ein zweidimensionaler Bildschirmkoordinatensatz berechnet wird, der die Position des Rasterelements auf dem Bildschirm (13) bestimmt,
**dadurch gekennzeichnet,**
daß mittels einer ersten Recheneinheit (10, 11) für die einzelnen Rasterelemente aus den die räumliche Lage der lokalen Flächennormale (N) repräsentierenden zweiten Koordinatensätzen und/oder dem die Position des virtuellen Betrachters bestimmenden dritten Parametersatz sowie dem die räumliche Lage des Rasterelements wiedergebenden ersten Koordinatensatz ein erster Adreßwert berechnet wird,
daß mit dem ersten Adreßwert ein Speicherplatz einer ersten Speichermatrix (8, 9) adressiert wird und ein den Bildeindruck der Umgebung aus einer bestimmten Perspektive wiedergebender zweiter Bildinformationswert aus dem adressierten Speicherplatz ausgelesen wird,
daß zur Berücksichtigung sowohl des lokalen Beleuchtungsmodells als auch von Reflexionen der Umgebung mittels einer zweiten Recheneinheit (12) aus dem ersten Bildinformationswert und dem zweiten Bildinformationswert ein dritter Bildinformationswert zur Ansteuerung des Bildschirms (13) berechnet wird.

2. Bilddarstellungsverfahren nach Anspruch 1, **dadurch gekennzeichnet,**

daß aus dem die Position des Betrachters wiedergebenden dritten Parametersatz und dem die räumliche Lage des Rasterelements wiedergebenden ersten Koordinatensatz ein Augvektor (E) berechnet wird, der in der Verbindungslinie zwischen dem Betrachter und dem Rasterelement liegt,
daß aus dem Augvektor (E) und dem die räumliche Lage der lokalen Flächennormale (N) repräsentierenden zweiten Koordinatensatz der an dem Rasterelement unter Annahme idealer Spiegelreflexion reflektierte Augvektor (M) berechnet wird,
daß der erste Adreßwert aus dem reflektierten Augvektor (M) berechnet wird und den Schnittpunkt des reflektierten Augvektors (M) mit einer das Rasterelement oder die Polygonfläche umgebenden kubischen Hüllfläche repräsentiert, wobei die erste Speichermatrix (8) den im Rahmen von Spiegelreflexion zu berücksichtigen Bildeindruck der Umgebung wiedergibt.

3. Bilddarstellungsverfahren nach Anspruch 1 oder 2, **dadurch gekennzeichnet,**

daß mittels einer dritten Recheneinheit (11) aus dem die räumliche Lage der lokalen Flächennormale (N) repräsentierenden zweiten Koordinatensatz ein zweiter Adreßwert berechnet wird, der den Schnittpunkt der lokalen Flächennormale (N) mit einer das Rasterelement oder die Polygonfläche umgebenden kubischen Hüllfläche repräsentiert,
daß mit dem zweiten Adreßwert ein Speicherplatz einer zweiten Speichermatrix (9) adressiert und aus dem adressierten Speicherplatz ein vierter Bildinformationswert ausgelesen wird, der einen im Rahmen diffuser Reflexion zu berücksichtigenden Bildeindruck der Umgebung wiedergibt,
daß der zur Ansteuerung des Bildschirms (13) dienende dritte Bildinformationswert von der zweiten Recheneinheit (12) aus dem entsprechend dem lokalen Beleuchtungsmodell ermittelten ersten Bildinformationswert und dem spekulare Umgebungsreflexionen wiedergebenden zweiten Bildinformationswert und dem diffuse Umgebungsreflexionen wiedergebenden vierten Bildinformationswert berechnet wird.

4. Bilddarstellungsverfahren nach einem der vorhergehenden Ansprüche, **dadurch gekennzeichnet,** daß der erste Adreßwert und/oder der zweite Adreßwert zur positionsabhängigen Adressierung unterschiedlicher, jeweils verschiedene Umgebungen definierender Speicherbereiche der ersten Speichermatrix (8) und/oder der zweiten Speichermatrix (9) in Abhängigkeit von dem die räumliche Lage der Polygonfläche wiedergebenden ersten Parametersatz oder dem die räumliche Lage des Rasterelements wiedergebenden ersten Koordinatensatz berechnet wird.

5. Bilddarstellungsverfahren nach einem der Ansprüche 1 bis 3, **dadurch gekennzeichnet,** daß zur positionsabhängigen Darstellung unterschiedlicher Umgebungen in Abhängigkeit von dem die räumliche Lage der Polygonfläche wiedergebenden ersten Parametersatz oder dem die räumliche Lage des Rasterelements wiedergebenden ersten Koordinatensatz ein Auswahlwert berechnet wird und die erste Speichermatrix (8) und/oder die zweite Speichermatrix (9) in Abhängigkeit von dem Auswahlwert aus einer Vielzahl von unterschiedliche Umgebungseindrücke definierenden Speichermatrizen ausgewählt wird.

6. Bilddarstellungsverfahren nach einem der vorhergehenden Ansprüche, **dadurch gekennzeichnet,** daß die erste Speichermatrix (8) und/oder die zweite Speichermatrix (9) einen Teilbereich der darzustellenden Umgebung definiert, wobei jedem Raumwinkelbereich der darzustellenden Umgebung ein Speicherplatz der ersten Speichermatrix (8) und/oder ein Speicherplatz der zweiten Speichermatrix (9) eindeutig zugeordnet ist und der erste und/oder der zweite Adreßwert unter der Annahme einer Wiederholung des vorgegebenen Teilbereichs auf der kubischen Hüllfläche berechnet wird.

7. Bilddarstellungsverfahren nach Anspruch 6, **dadurch gekennzeichnet,** daß die in der ersten Speichermatrix (8) abgespeicherten zweiten Bildinformationswerte und/oder die in der zweiten Speichermatrix (9) abgespeicherten vierten Bildinformationswerte von einer vorgegebenen Bildvorlage eingelesen und anschließend zur Erreichung eines natürlichen Bildeindrucks mittels einer Bildverarbeitungseinheit derart verändert werden, daß zwischen benachbarten Teilbereichen entlang der Stoßkante keine Intensitäts- oder Farbsprünge auftreten und/oder die Änderung der Intensitäts-oder Farbwerte über die Stoßkante hinweg konstant ist.

8. Bilddarstellungsverfahren nach einem der vorhergehenden Ansprüche, **dadurch gekennzeichnet,**

daß aus dem die räumliche Lage des Rasterelements repräsentierenden ersten Koordinatensatz und dem die räumliche Lage der Polygonfläche repräsentierenden ersten Parametersatz ein dritter Adreßwert berechnet wird, der die Position des Rasterelements innerhalb der Polygonfläche wiedergibt,
daß mit dem dritten Adreßwert ein Speicherplatz einer dritten Speichermatrix adressiert wird und ein die Oberflächenstruktur der Polygonfläche definierender fünfter Bildinformationswert aus dem adressierten Speicherplatz ausgelesen wird,
daß der zur Ansteuerung des Bildschirms (13) dienende dritte Bildinformationswert von der zweiten Recheneinheit (12) in Abhängigkeit von dem fünften Bildinformationswert berechnet wird.

9. Vorrichtung zur Darstellung von computermodellierten Objekten, die in Form eines Gittermodells vorliegen und durch mehrere aneinandergrenzende Polygonflächen nachgebildet sind, insbesondere zur Durchführung des Bilddarstellungsverfahrens nach einem der vorhergehenden Ansprüche, mit

einer ersten Baugruppe (3, 4) zur Berechnung einer Vielzahl von die räumliche Lage jeweils eines Rasterelements der jeweiligen Polygonfläche repräsentierenden ersten Koordinatensätzen aus einem vorgegebenen, die der Polygonfläche repräsentierenden ersten Parametersatz,

einer zweiten Baugruppe (5, 6) zur Berechnung von die räumliche Lage der lokalen Flächennormalen (N) in den einzelnen Rasterelementen repräsentierenden zweiten Koordinatensätzen in Abhängigkeit von dem ersten Parametersatz,

einer dritten Baugruppe (7) zur Berechnung eines den Bildeindruck jeweils eines Rasterelements wiedergebenden ersten Bildinformationswertes entsprechend einem lokalen Beleuchtungsmodell in Abhängigkeit von dem die räumliche Lage des Rasterelements wiedergebenden ersten Koordinatensatz und dem die räumliche Lage der lokalen Flächennormale (N) wiedergebender zweiten Koordinatensatz und einem vorgegebenen, die räumliche Lage und die optischen Eigenschaften mindestens einer Lichtquelle bestimmenden zweiten Parametersatz sowie einem vorgegebenen, die Position eines virtuellen Betrachters bestimmenden dritten Parametersatzes,

einer vierten Baugruppe (14) zur Berechnung eines zweidimensionalen Bildschirmkoordinatensatzes für jedes Rasterelement aus dem die räumliche Lage des Rasterelements repräsentierenden ersten Koordinatensatz, **dadurch gekennzeichnet,**

daß zur Wiedergabe von Reflexionen der Umgebung in der Objektoberfläche eine erste Speichermatrix (8, 9) vorgesehen ist, wobei jeder Speicherplatz der ersten Speichermatrix (8, 9) einen den Bildeindruck der Umgebung aus einer bestimmten Perspektive wiedergebenden zweiten Bildinformationswert enthält,

daß zur Berechnung eines ersten Adreßwerts in Abhängigkeit von den die räumliche Lage der lokalen Flächennormale (N) repräsentierenden zweiten Koordinatensätzen und/oder dem die Position des virtuellen Betrachters wiedergebenden dritten Parametersatz sowie dem die räumliche Lage des Rasterelements wiedergebenden ersten Koordinatensatz eine erste Recheneinheit (10, 11) vorgesehen ist, die ausgangsseitig zur Adressierung eines Speicherplatzes mit der ersten Speichermatrix (8, 9) verbunden ist,

daß zur Berechnung eines sowohl das lokale Beleuchtungsmodell als auch Reflexionen der Umgebung berücksichtigenden dritten Bildinformationswerts eine zweite Recheneinheit (12) vorgesehen ist, die eingangsseitig zur Aufnahme des dem lokalen Beleuchtungsmodell entsprechenden ersten Bildinformationswerts mit der dritten Baugruppe (7) und zur Aufnahme des die Reflexionen der Umgebung wiedergebenden zweiten Bildinformationswerts mit der ersten Speichermatrix (8, 9) verbunden ist.

10. Vorrichtung nach Anspruch 9, **dadurch gekennzeichnet,**

daß zur Wiedergabe von diffusen Umgebungsreflexionen eine zweite Speichermatrix (9) vorgesehen ist, wobei jeder Speicherplatz der zweiten Speichermatrix (9) einen vierten Bildinformationswert enthält, der den bei diffuser Reflexion zu berücksichtigenden Bildeindruck der Umgebung enthält,

daß zur Berechnung eines zweiten Adreßwertes eine dritte Recheneinheit (11) vorgesehen ist, die eingangsseitig zur Aufnahme des die räumliche Lage der lokalen Flächennormale (N) wiedergebenden zweiten Koordinatensatzes mit der zweiten Baugruppe (6) und ausgangsseitig zur Adressierung mit dem zweiten Adreßwert mit der zweiten Speichermatrix (9) verbunden ist,

daß die zweite Recheneinheit (12) eingangsseitig zur Berechnung des zur Ansteuerung des Bildschirms (13) dienenden dritten Bildinformationswertes aus dem entsprechend dem lokalen Beleuchtungsmodell ermittelten ersten Bildinformationswert und dem spekulare Umgebungsreflexionen wiedergebenden zweiten Bildinformationswert und dem diffuse Umgebungsreflexionen wiedergebenden vierten Bildinformationswert mit der zweiten Speichermatrix (9) verbunden ist.

11. Vorrichtung nach Anspruch 9 oder 10, **dadurch gekennzeichnet,**

daß zur Berechnung eines von der Position der Polygonfläche oder des Rasterelements abhängigen Auswahlwerts aus dem die räumliche Lage der Polygonfläche wiedergebenden ersten Parametersatz oder aus dem die räumliche Lage des Rasterelements wiedergebenden ersten Koordinatensatz eine vierte Recheneinheit (10, 11) vorgesehen ist,

daß die vierte Recheneinheit (10, 11) zur positionsabhängigen Auswahl eines Speicherbereiches mit der ersten und/oder der zweiten Speichermatrix (8, 9) oder zur positionsabhängigen Auswahl der ersten und/oder zweiten Speichermatrix (8, 9) aus einer Vielzahl von Speichermatrizen mit einer Auswahleinheit (10, 11) verbunden ist.

12. Vorrichtung nach einem der Ansprüche 9 bis 11, **dadurch gekennzeichnet,** daß die erste Speichermatrix und/ oder die zweite Speichermatrix eine Rundumaufnahme aus der Perspektive des jeweiligen Rasterelements oder der jeweiligen Polygonfläche wiedergibt und jedem Speicherplatz der ersten Speichermatrix und/oder jedem Speicherplatz der zweiten Speichermatrix eineindeutig ein Raumwinkelbereich der darzustellenden Umgebung zugeordnet ist.

13. Vorrichtung nach einem der Ansprüche 9 bis 12, **dadurch gekennzeichnet,**

daß die erste Speichermatrix und/oder die zweite Speichermatrix einen Teilbereich der darzustellenden Umgebung definiert, wobei jedem Raumwinkelbereich der darzustellenden Umgebung ein Speicherplatz der ersten Speichermatrix und/oder ein Speicherplatz der zweiten Speichermatrix eindeutig zugeordnet ist, daß zur Adressierung der ersten Speichermatrix und/oder der zweiten Speichermatrix eine erste Adressierungseinheit vorgesehen ist, die eingangsseitig zur Aufnahme des den darzustellenden Raumwinkelbereich der Umgebung bestimmenden ersten oder zweiten Adreßwerts mit der ersten und/oder zweiten Recheneinheit und ausgangsseitig mit der ersten und/oder zweiten Speichermatrix verbunden ist.

14. Vorrichtung nach Anspruch 13, **dadurch gekennzeichnet,** daß die erste Speichermatrix und/oder die zweite Speichermatrix mit einer Bildverarbeitungseinheit verbunden ist, welche die in der ersten Speichermatrix abgespeicherten zweiten Bildinformationswerte und/oder die in der zweiten Speichermatrix abgespeicherten vierten Bildinformationswerte zur Erreichung eines natürlichen Bildeindrucks mittels einer Bildverarbeitungseinheit derart verändert, daß zwischen benachbarten Teilbereichen entlang der Stoßkante keine Intensitäts- oder Farbsprünge auftreten und/oder die Änderung der Intensitäts- oder Farbwerte über die Stoßkante hinweg konstant ist.

15. Vorrichtung nach einem der vorhergehenden Ansprüche, **dadurch gekennzeichnet,**

daß zur Nachbildung einer Oberflächenstruktur der jeweiligen Polygonfläche eine dritte Speichermatrix vorgesehen ist, wobei jedem Rasterelement der Polygonfläche ein Speicherplatz der dritten Speichermatrix zugeordnet ist und die einzelnen Speicherplätze der dritten Speichermatrix jeweils einen die Oberflächenstruktur definierenden fünften Bildinformationswert enthalten, daß zur Berechnung eines die räumliche Lage des jeweiligen Rasterelements innerhalb der jeweiligen Polygonfläche wiedergebenden dritten Adreßwerts und zur Adressierung der dritten Speichermatrix mit dem dritten Adreßwert eine zweite Adressierungseinheit vorgesehen ist, daß die zweite Recheneinheit (12) zur Berechnung des zur Ansteuerung des Bildschirms (13) dienenden dritten Bildinformationswerts in Abhängigkeit von dem die Oberflächenstruktur definierenden fünften Bildinformationswert eingangsseitig mit der dritten Speichermatrix verbunden ist.

Fig.1

Fig.2a

Fig.2b

Fig.3

Fig.4a

Fig.4b